# EUROPEAN PATENT APPLICATION

(11) **EP 4 306 400 A1**
(43) Date of publication of application: **17.01.2024**
(21) Application number: 22382655.3
(22) Date of filing: 11.07.2022
(51) Int. Cl.: B63B 21/50, F03D 9/25, H02G 1/10

(54) **TRANSPORTABLE FLOATING DEVICE FOR TEMPORARY INTERCONNECTION OF DYNAMIC CABLES OF WIND PLATFORMS IN FLOATING WIND FARMS**

(71) Applicant: SAITEC, S.A., 48940 Leioa (Bizkaia) (ES)
(72) Inventor: Galdos Tobalina, Alberto, 48940 Leioa-Bizkaia (ES)
(74) Representative: Clarke, Modet y Cía., S.L.

(57) **Abstract**

Transportable floating device for temporary interconnection of dynamic cables of wind platforms in floating wind farms, comprising an autonomous mooring system, at least two inputs (1) for the introduction of dynamic cables (12) of at least two wind platforms (14), lifting means inside the floating device (15) for mooring and lifting the dynamic cables (12), an interconnection system (7) and a safety section box (8) inside the floating device (15) for the connection of the dynamic cables (12) of the wind platforms (14). Additionally, the floating device has an autonomous power system (9) for powering the elements of said device.

## Description

### Field of invention

The present invention belongs to the maritime and energy sector, specifically to the field of floating energy parks, and more specifically to interconnected wind platform parks, and specifically to their maintenance. The invention relates to a floating device for temporary interconnection of dynamic cables of wind platforms, when one of them must be disconnected and removed for repair or replacement.

### Background of the invention

The development of renewable energies in the maritime sector, fundamentally focused on offshore wind energy, has taken over from the oil industry regarding the development of offshore platforms, their use and maintenance. In the development of the wind platforms, an attempt was initially made to apply the existing developments of the oil industry, but due to the demands of the environment, a large number of platforms to be installed in each park in the form of wind turbines, transformation stations and other elements, and specific characteristics of the sector, a new ecosystem of offshore elements for the installation, operation and maintenance of wind However, due to the demands of the environment, a large number of platforms were installed in each park in the form of wind turbines, transformer stations and other elements and specific characteristics of the sector, quickly giving rise to a new ecosystem of offshore elements for the installation, operation and maintenance of wind farms.

The floating wind turbines of a marine park may require the performance of certain activities of maintenance, repair or replacement of equipment of great weight or size (gear box, blades, etc.) throughout their useful life, whose execution in the open sea may be very difficult or even technically or economically unapproachable with currently existing means.

The alternative to the above consists of disconnecting the platform from its mooring system and from the electrical system of the park as a whole and towing it to the port to carry out said repair or replacement operations in calm waters and with simpler auxiliary means. The mooring system can be disconnected by leaving the mooring lines deposited on the bottom and placing a recovery gear with a floating signaling buoy at the disconnected end of each one of them.

The problem involved in this operation is that floating platforms with wind turbines are in turn electrically interconnected in series, forming rows or sets, which in turn are interconnected with each other and with the substation to transport the energy, and this can mean that the removal of a platform and its transfer to the port leaves other platforms in the same row disconnected from the substation if it is located between them and the substation, with the consequent loss of production of the same while this situation is maintained.

Document US8729723B2 refers to a floating platform with at least two turbines installed on it, permanently connected to a permanent mooring buoy (SBM, Single Buoy Mooring) system, used in some installations of the oil and gas industry. In this installation, when a platform needs to be removed, disconnection is carried out by disconnecting and separating the floating platform from the permanent mooring buoy (SBM), while the mooring lines and live cables remain on the buoy. Therefore, the problem posed by this platform disconnection and separation system is only applicable when an anchoring system is used using permanent mooring buoys (SBM).

On the other hand, document EP3566941 B1 refers to a floating device for the permanent interconnection of the dynamic cables and which is also permanently attached to the wind platform, being able to disconnect from it and remain floating if the platform is removed, and therefore, without interrupting the transport of energy of the remaining turbines linked in series with the one that is removed. Therefore, the problem in this case is that permanent floating devices attached to the platforms are necessary, which implies a greater need for resources, space and maintenance of these permanent devices regardless of whether it is necessary to use them or not.

A transportable floating device that could be transported and temporarily connected to the dynamic cables of wind platforms in floating wind farms, providing the interconnection between the remaining wind platforms when one of them has had to be removed for maintenance, repair or replacement is therefore desirable, thus avoiding the inconveniences existing in the systems of the state of the art.

### Description of the invention

The present invention solves the problems existing in the state of the art by means of a transportable floating device for the temporary interconnection of dynamic cables of wind platforms in floating wind farms, which has an autonomous anchoring system, at least two inputs for the introduction of the dynamic cables of at least two wind platforms, lifting means inside the floating device for mooring and lifting the dynamic cables, as well as an interconnection system and a safety section box inside the floating device for the connection of the dynamic cables of the wind platforms. The device of the present invention additionally has an autonomous power system to provide the necessary energy for the operation of the elements included in it, including winches, hoists, beacons, and different drives.

The dynamic cables of the wind platforms comprise at least high-voltage, low-voltage and fiber optic cables.

Preferably, the lifting means have hoists and pulley systems arranged vertically to the entrances to facilitate easy lifting of the dynamic cables from the platforms.

According to a preferred embodiment of the invention, the entrances for the introduction of the dynamic cables of the platforms have a bell mouth, which facilitates the guiding and introduction of the cables through them.

According to a particular embodiment of the invention, the autonomous anchoring system of the floating device has at least one winch connected to at least one anchoring cable on its upper deck.

In addition, according to different embodiments, the floating device also has lifting and mooring means for the mooring lines of the wind platforms on the upper deck to facilitate lifting and anchoring of these to the floating device. In particular, these lifting and mooring means may consist of mooring structures and winches.

To facilitate the access of personnel to the interior of the floating device, a sealed entrance can be arranged on the upper cover.

In addition, to signal and make the device visible during its transport and operation, it may have signaling beacons arranged on its upper cover.

Therefore, by means of the described configuration, the floating device object of the present invention solves the problems existing in the state of the art when disconnection and removal of a platform from a wind farm is required. The floating device is small in size and can be transported or towed to the vicinity of the platform to be removed from the wind farm, so that the electrical cables that came to it, once disconnected from it, are inserted into the device and interconnect with each other giving continuity to the electrical system.

Likewise, the anchoring line recovery gear, or even the anchoring lines of the platform that is being removed, can remain attached to the floating device itself, thus facilitating and simplifying its subsequent reinstallation.

### Brief description of the drawings

Next, to facilitate understanding of the invention, by way of illustration only, and not by way of limitation, an embodiment of the invention will be described with reference to a series of figures.
Figure 1 is a perspective view of an embodiment of the transportable floating device object of the present invention with two entries for dynamic cables of two platforms.
Figure 2 is a view from another perspective of the transportable floating device of Figure 1.
Figure 3 is a perspective view of another embodiment of the transportable floating device, in this case with three entries for dynamic cables of three platforms.
Figure 4 is a view from another perspective of the transportable floating device of Figure 3.
Figure 5 is a section showing the interior of an embodiment of the portable floating device of the present invention, with its main elements.
Figure 6 is an exterior front view of the device of Figure 5, showing its main exterior elements.
Figure 7 is a schematic view of a transportable floating device together with the floating platform to be removed, showing the dynamic cables and mooring lines.
Figures 8a to 8d show the connection sequence of the dynamic cables of the platforms to the device interconnection system. Figure 8a shows the dynamic cable connection to a device lifting cable. Figure 8b shows the lifting of said cable by means of a winch of the device. Figure 8c shows the connection of the dynamic cable to the interconnection system and removal of the lifting cable. Finally, Figure 8d shows the two dynamic cables of two platforms connected to the interconnection system of the present device, in such a way that said platforms are connected to each other.
Figure 9 schematically shows the final arrangement in which the dynamic cables of the platforms remain attached to the device, as well as the mooring lines of both platforms, until they are connected to the device for removal.

These figures refer to a set of elements that are:
1. floating device inputs for dynamic cables
2. mooring structures
3. winches
4. mooring cable of the floating device mooring system
5. watertight entrance
6. hoists
7. interconnection system
8. safety section box
9. autonomous power system
10. upper cover of the floating device
11. mooring lines of wind platforms
12. dynamic cables of wind platforms
13. dynamic cable pulling heads
14. wind platforms
15. floating device
16. winch lifting cables

### Detailed description of the invention

The object of the present invention is a transportable floating device 15 for the temporary interconnection of dynamic cables 12 of wind platforms 14 in floating wind farms.

As can be seen in the figures, the floating device 15 has an autonomous anchoring system, at least two entrances 1 for the introduction of the dynamic cables 12 of at least two wind platforms 14, lifting means inside the device floating device for mooring and lifting the dynamic cables 12, as well as an interconnection system 7 and a safety section box 8 inside the floating device 15 for connecting the dynamic cables 12 of the wind platforms 14. The floating device 15 of the present invention additionally presents an autonomous power system 9 to provide the necessary power for the operation of the different elements.

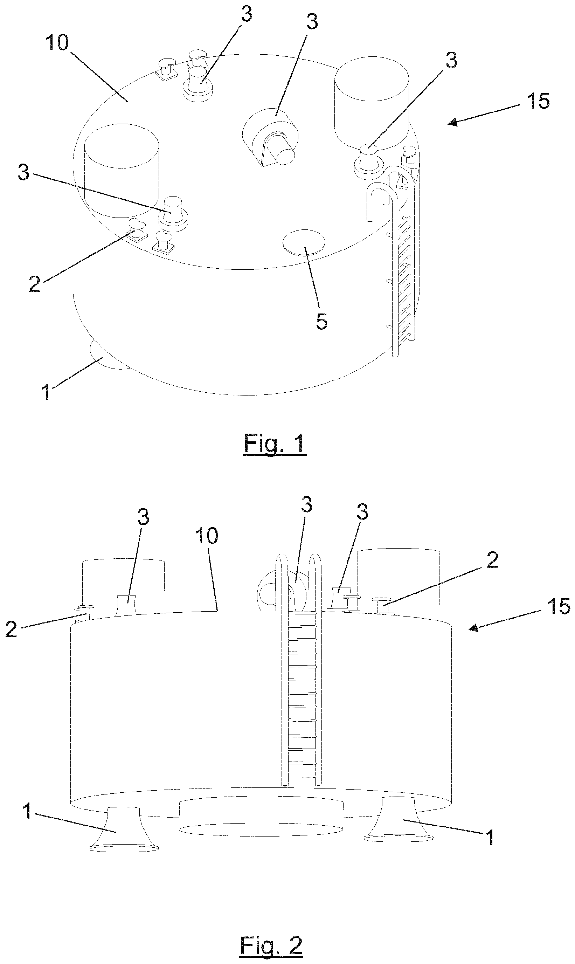

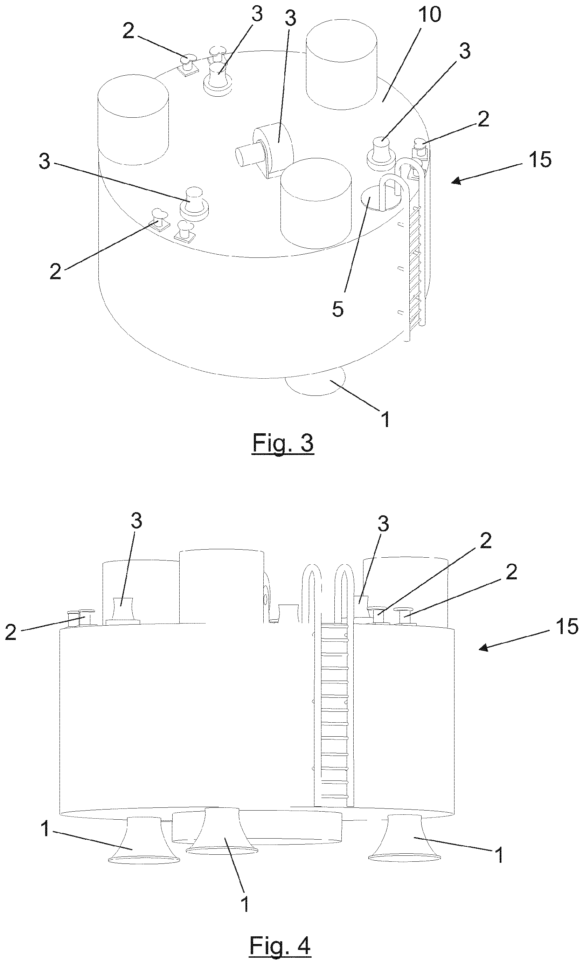

Figures 1 and 2 show a floating device 15 with two inputs 1 for the introduction and connection of the dynamic cables 12 of two wind platforms 14, while figures 3 and 4 show a different embodiment of the floating device 15 that has three inputs 1 for the introduction and connection of the dynamic cables 12 of three wind platforms 14.

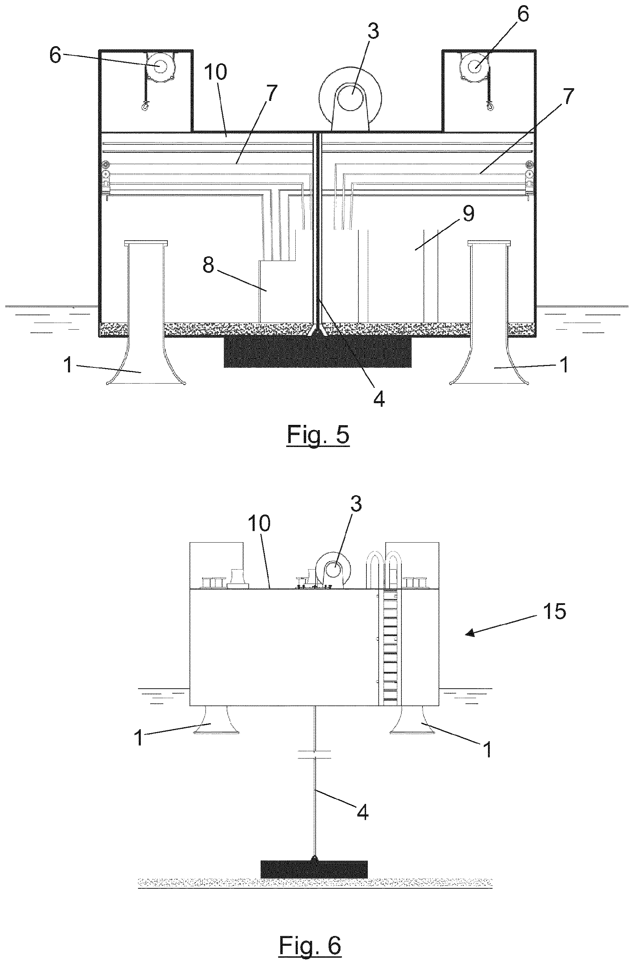

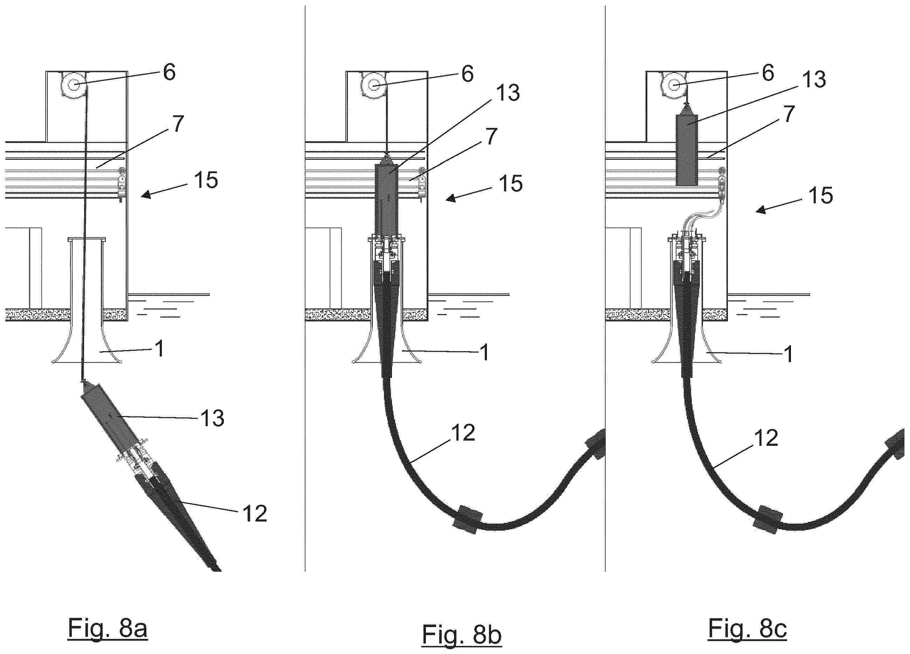

As can be seen in Figures 5, and 8a to 8d, the lifting means preferably have hoists 6 and pulley systems arranged vertically to the entrances 1, which facilitates the connection and lifting of the dynamic cables 12 of the platforms 14.

According to a particular embodiment of the invention, the autonomous anchoring system of the floating device 15 has on its upper deck 10 at least one winch 3 connected to at least one anchoring cable 4. Figures 2 and 5 show the anchoring system collected, to transport the floating device 15, while Figure 6 shows the extended mooring system, in use, to moor the floating device 15 to the bottom.

In addition, according to different embodiments, the floating device 15 has on the upper deck 10 lifting and mooring means for the mooring lines 11 of the wind platforms 14 to facilitate their lifting and anchoring to the floating device 15. In the Figures 1 to 4 show a particular embodiment, in which these lifting and mooring means consist of mooring structures 2 and winches 3. In this way, once the wind platform 14 has been disconnected, the mooring lines 11 can be left fixed to the floating device 15, in order to simplify the reconnection of the wind platform 14 once it returns from its repair or maintenance.

To facilitate the access of personnel to the interior of the floating device 15, a watertight entrance 5 is arranged in the upper cover 10.

In addition, to signal and make visible the floating device 15 and increase safety during its transport and operation, signaling beacons may be arranged on its upper cover 10.

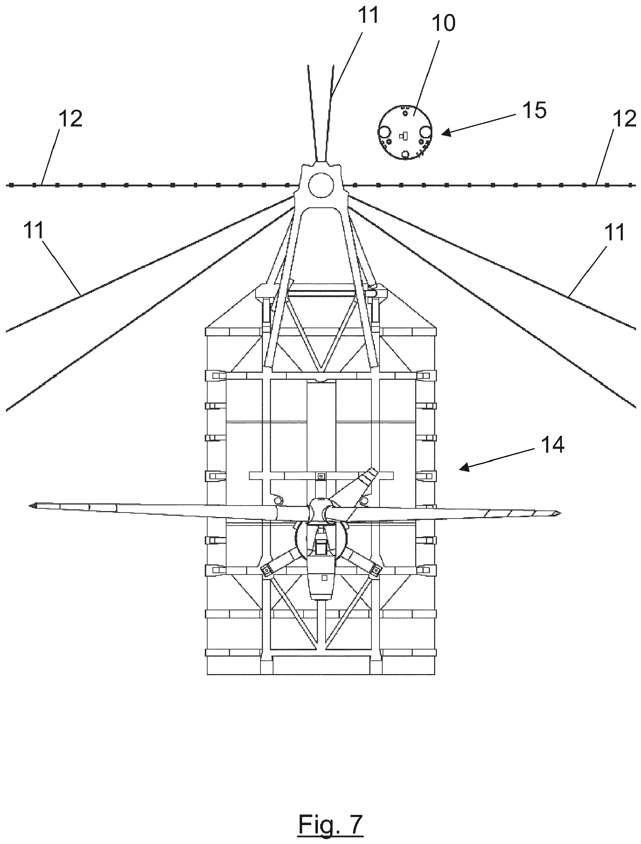

In this way, by means of the floating device 15 of the present invention, the operations for the removal of a wind platform 14 after connecting its dynamic cables 12 to the floating device 15 will begin by positioning said floating device 15 by means of its own autonomous anchoring system in the proximity of the wind platform 14 to be removed. Figure 7 shows a plan view of a wind platform 14 that is to be removed with its mooring lines 11 and dynamic cables 12, together with the floating device 15.

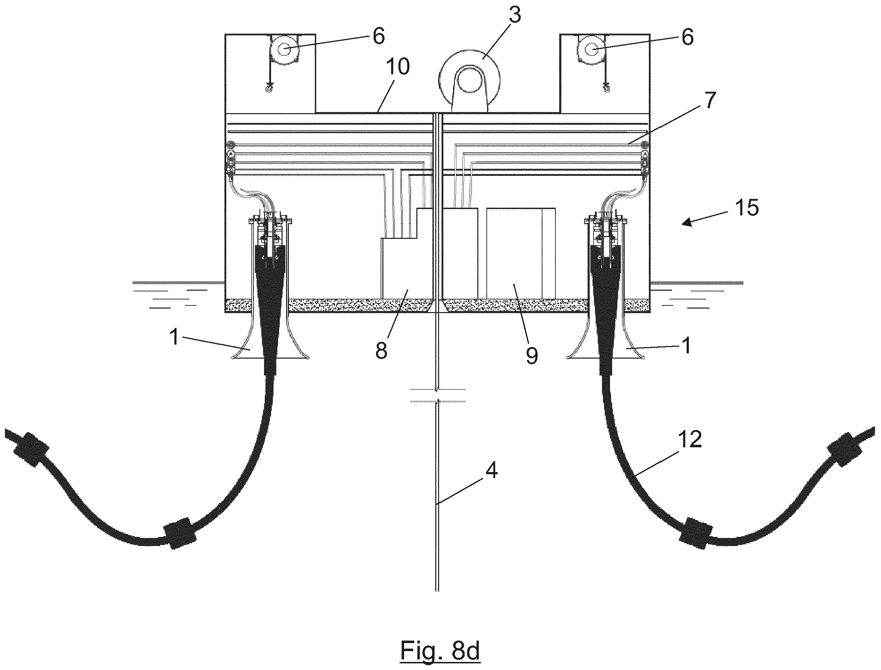

Next, the dynamic cables 12 of the wind platform 14 with their pulling heads 13 are disconnected and these are attached to the lifting cables 16 of the inner winches 3, as shown in Figure 8a. Figures 8b, 8c and 8d show the successive phases of lifting, fixing the dynamic cables 12, removing the pulling heads 13, and connecting the ends of the conductors to the interconnection system 7.

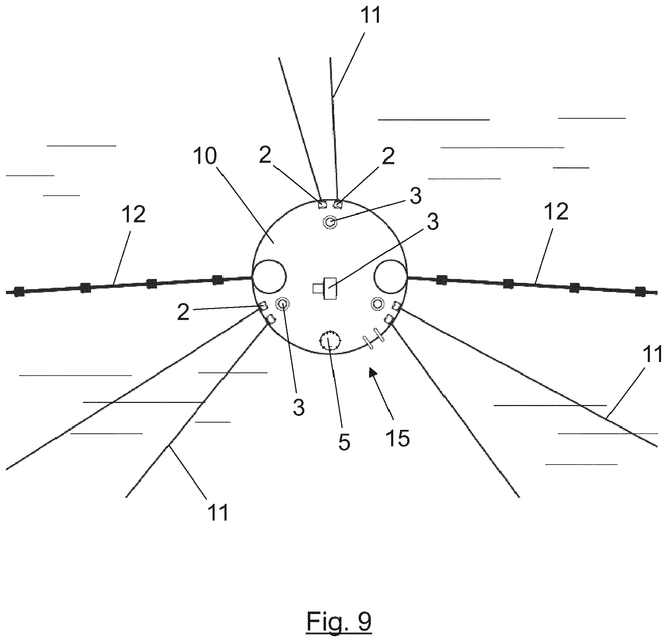

Once this operation is finished, the sequential mooring disconnection of the wind platform 14 will begin and its mooring lines 11 will be fixed with auxiliary rigging to the mooring structures 2 in the floating device 15 by means of the winches 3 provided for this purpose. In this way, the mooring lines 11 and the auxiliary gear will already be arranged in the floating device for use with the wind platform 14 when it returns to its position. Figure 9 shows the final situation.

The reinstallation of the wind platform 14 once it has been repaired, maintained or replaced, is carried out by means of the reverse process, first connecting the mooring lines 11 and then the dynamic cables 12 disconnected from the floating device 15, the latter finally being removed from the site, given its temporary and transportable nature.

## Claims

1. Transportable floating device for temporary interconnection of dynamic cables of wind platforms in floating wind farms, **characterized in that** it comprises
- an autonomous mooring system,
- at least two inputs (1) configured for the introduction of the dynamic cables (12) of at least two wind platforms (14),
- lifting means arranged inside the floating device (15) configured for mooring and lifting the dynamic cables (12),
- an interconnection system (7) and a safety section box (8) inside the floating device (15) configured for the connection of the dynamic cables (12) of the wind platforms (14),
- and an autonomous power system (9).

2. Transportable floating device for the temporary interconnection of dynamic cables of wind platforms in floating wind farms according to the preceding claim, in which the lifting means comprise hoists (6) arranged vertically to the inputs (1).

3. Transportable floating device for temporary interconnection of dynamic cables of wind platforms in floating wind farms according to any of the preceding claims, in which the inlets comprise a bell mouth.

4. Transportable floating device for temporary interconnection of dynamic cables of wind platforms in floating wind farms according to any of the preceding claims, in which the autonomous anchoring system comprises on the upper deck (10) of the floating device (15) at least one winch (3) connected to at least one anchor cable (4).

5. Transportable floating device for temporary interconnection of dynamic cables of wind platforms in floating wind farms according to any of the preceding claims, comprising on the upper deck (10) lifting and mooring means for the mooring lines (11) of the wind platforms (14).

6. Transportable floating device for temporary interconnection of dynamic cables of wind platforms in floating wind farms according to the previous claim, in which the lifting and mooring means of the mooring lines (11) of the wind platforms (14) comprise mooring structures (2) and winches (3).

7. Transportable floating device for temporary interconnection of dynamic cables of wind platforms in floating wind farms according to any of the preceding claims, comprising on the upper cover (10) a watertight entrance (5) configured for personnel access to the interior of the floating device (15).

8. Transportable floating device for the temporary interconnection of dynamic cables of wind platforms in floating wind farms according to any of the preceding claims, comprising signaling beacons on its upper cover (10).
